(19) Europäisches Patentamt / European Patent Office / Office européen des brevets

(11) **EP 3 079 905 B1**

(12) **FASCICULE DE BREVET EUROPÉEN**

(45) Date de publication et mention de la délivrance du brevet:
**03.03.2021 Bulletin 2021/09**

(21) Numéro de dépôt: **14838897.8**

(22) Date de dépôt: **10.12.2014**

(51) Int Cl.:
**B32B 17/10** *(2006.01)*    **C03C 27/12** *(2006.01)*
**B60Q 3/208** *(2017.01)*

(86) Numéro de dépôt international:
**PCT/EP2014/077234**

(87) Numéro de publication internationale:
**WO 2015/086683 (18.06.2015 Gazette 2015/24)**

(54) **TOIT DE VÉHICULE VITRÉ**

VERGLASTES FAHRZEUGDACH

VITREOUS VEHICLE ROOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.12.2013 BE 201300837**

(43) Date de publication de la demande:
**19.10.2016 Bulletin 2016/42**

(73) Titulaire: **AGC Glass Europe**
**1348 Louvain-La-Neuve (BE)**

(72) Inventeurs:
• **LINTHOUT, Sebastien**
  **B-1390 Archennes (BE)**

• **LOSOT, Rostislav**
  **B-1348 Louvain-La-Neuve (BE)**
• **VIVIER, Jonathan**
  **B-5030 Beuzet (BE)**

(74) Mandataire: **AGC Glass Europe**
**Technovation Centre**
**Intellectual Property Department**
**Rue Louis Blériot 12**
**6041 Gosselies (BE)**

(56) Documents cités:
**WO-A1-2007/077239      WO-A1-2009/087584**
**JP-A- 2003 157 026      JP-A- 2006 323 323**
**US-A1- 2006 092 348      US-A1- 2010 060 821**

EP 3 079 905 B1

**Description**

L'invention concerne les toits de véhicules constitués pour partie au moins d'un vitrage. De manière plus précise l'invention concerne les toits dont le vitrage recouvre une part importante de leur surface, voire la totalité de celle-ci.

Les toits vitrés se substituent pour une part croissante aux toits traditionnels qui sont partie de la carrosserie des véhicules. Le choix de ces toits est le fait des constructeurs d'offrir à leurs clients cette option donnant l'impression de l'ouverture du véhicule vers l'extérieur, à la manière d'un cabriolet, sans avoir les inconvénients de ces derniers, les toits maintenant le confort d'une berline traditionnelle. Pour cela les toits vitrés doivent satisfaire à de nombreuses exigences. Il convient tout d'abord de répondre aux obligations de sécurité. Les toits vitrés doivent satisfaire aux règlements qui imposent une résistance à l'éviction en cas d'accident. Dans ce sens ils doivent satisfaire aux règles désignées «R43». La résistance à l'éviction des passagers nécessite notamment le recours à des vitrages feuilletés.

La présence de vitrages feuilletés n'exclut pas la nécessité de limiter le poids. Pour cette raison les toits feuilletés utilisés doivent aussi présenter des épaisseurs bien maîtrisées. En pratique les vitrages de ces toits ont une épaisseur qui n'est pas supérieure à 15mm et de préférence pas supérieure à 10mm. Dans le poids de ces vitrages, les feuilles de verre représentent une part significative compte tenu de la masse volumique du verre bien supérieure à celle des feuilles plastiques intercalaires. Aussi l'épaisseur totale des feuilles de verre est de préférence limitée à 6mm et avantageusement à 5mm.

Le choix de toits vitrés, comme précisé ci-dessus, a pour but initial le gain de luminosité dans l'habitacle. Par ailleurs le souhait d'un accroissement de luminosité dans l'habitacle n'est pas le seul but poursuivi, ou il n'est pas nécessairement permanent. Il peut s'y substituer au moins partiellement celui de conférer un caractère «privatif» temporaire par passage d'un état «transparent» à un état «translucide». L'utilisateur peut, selon le moment d'utilisation, préférer une luminosité moindre, ou simplement maintenir le caractère «privatif» qui isole l'habitacle des regards extérieurs.

Des solutions sont proposées antérieurement pour modifier la transmission lumineuse des vitrages en fonction des conditions d'utilisation. Il s'agit notamment des vitrages dits «électro-commandés», tels que les vitrages comportant des moyens électro-chromes dans lesquels la variation est obtenue par modification de l'état d'ions colorés dans des compositions incluses dans ces vitrages. Il s'agit aussi de vitrages comprenant des couches de particules en suspension, qui selon l'application d'une tension électrique sont ordonnées ou non tels que les systèmes dits SPD (pour «suspended particles devices»).

Un souhait des constructeurs est de disposer de produits dont les propriétés s'apparentent à celles évoquées ci-dessus, mais obtenues avec des produits sensiblement moins coûteux.

Dans leur recherche, les constructeurs peuvent même envisager des produits dont les performances peuvent être différentes de celles des produits indiqués ci-dessus, au moins pour celles qu'ils estiment de moindre importance. A l'inverse certaines fonctionnalités restent déterminantes pour la mise en œuvre de ces toits à propriétés commandées. En premier les constructeurs veulent des systèmes dont la réaction à la commande soit pratiquement instantanée, contrairement à ce que l'on observe pour les électro-chromes. Ils veulent aussi des propriétés optiques bien précises. Le vitrage à l'état inactif doit masquer complètement la vision pour conférer le caractère «privé» recherché. A l'inverse à l'état actif la qualité du vitrage doit conduire à ce qui est désigné par une bonne «clarté». Cette dernière doit conduire à offrir, aussi bien en vision lointaine que proche une image bien nette. Cette netteté est tributaire des conditions de diffusion résiduelle. Le but est de minimiser cette diffusion, ou au moins d'en atténuer la perception négative qui s'y attache.

L'invention concerne les toits électro-commandes qui permettent de passer d'un état transparent à un état translucide, dans les deux états la transmittance restant limitée. L'invention propose l'utilisation des films à cristaux liquides (LC) comme moyen modifiant les propriétés de transmission.

Le développement des toits vitrés soulève de nombreuses questions et ouvre la voie à de nouvelles réalisations. Certaines fonctions peuvent, ou doivent être modifiées compte tenu des spécificités de ces toits.

Parmi ces fonctions figure l'éclairage de l'habitacle, qu'il s'agisse de l'éclairage d'ambiance ou de celui plus localisé correspondant à ce qui est qualifié de «liseuses». De façon traditionnelle les moyens utilisés pour ces éclairages sont disposés sur le toit ou sur le revêtement intérieur de celui-ci. Fréquemment également les moyens d'éclairage font partie d'un ensemble qui s'étend en partie sur le pare-brise et qui comporte l'embase du rétroviseur intérieur, différents capteurs commandant le déclenchement des essuie-glace, celui des projecteurs extérieurs, ensemble qui est aussi le support de moyens de communication de données par voie d'ondes de fréquences variées (télépéages, GPS...), ou celui d'aide à la conduite comme les caméras infrarouge. Les ensembles en question font obstacle localement à la transparence souhaitée qui motive le choix de solutions «vitrées».

L'invention se propose d'utiliser au mieux les vitrages constituant les toits en y intégrant les moyens d'éclairage de l'habitacle de telle sorte que ceux-ci n'altèrent pas significativement leur transparence. Cette intégration, comme décrit ultérieurement, permet de bénéficier de nouvelles dispositions adaptées à ces toits vitrés.

Le mode choisi selon l'invention est l'utilisation de diodes électroluminescentes (LED) localisées dans le vitrage feuilleté. Ce choix a été proposé antérieurement par exemple dans les demandes WO2004/062908, EP1437215, EP1979160. Selon ces demandes les diodes sont incluses dans l'intercalaire plastique qui associe les deux feuilles de verre. Selon la demande considérée, les LED sont alimentées soit par des fils conducteurs fins (EP1979160) soit par des couches conductrices transparentes (EP1437215).

Au-delà du principe de l'utilisation de LED pour l'éclairage, l'art antérieur laisse entières des questions concernant les conditions qui font que ces produits répondent aux demandes des constructeurs, et sont effectivement réalisables dans les techniques d'intégration aux structures feuilletées considérées. L'art antérieur ignore aussi les questions liées à l'intégration dans le même vitrage de ces moyens d'éclairage et de ceux permettant le contrôle de la transmittance. Les inventeurs proposent en conséquence des solutions à ces questions.

Une exigence liée au mode d'éclairage concerné, est de disposer d'une puissance suffisante, notamment pour la constitution de liseuses.

Des utilisations pour l'affichage d'informations sous forme lumineuse ont été envisagées antérieurement. L'affichage d'informations ne nécessite qu'une puissance relativement faible, même lorsque l'affichage est situé sur un vitrage exposé à la lumière extérieure au véhicule, autrement dit à contre-jour. Les LED concentrent leur émission sur une surface très réduite de telle sorte que le contraste avec une lumière extérieure reste suffisant même pour une puissance limitée. Il n'en est pas de même pour l'application «éclairage». D'une certaine manière une puissance ponctuelle peut même constituer un inconvénient. Lorsque le regard se porte directement sur ces sources ponctuelles très intenses, il existe un risque d'éblouissement d'autant plus grand que la puissance délivrée est plus importante. La persistance rétinienne que cet éblouissement peut provoquer, est un phénomène qui donne naissance à des normes à respecter (IEC62471). Selon cette norme l'éclairage à la demande des constructeurs doit rester par exemple au niveau «RG1».

Dans la détermination de la puissance lumineuse pour un éclairage donné, il faut nécessairement tenir compte des éléments qui réduisent la lumière émise par les diodes, et notamment le fait qu'une part plus ou moins importante selon les vitrages considérés, est absorbée au passage des feuilles de verre, des intercalaires et de tout élément disposé sur le chemin suivi par le flux lumineux émis.

La puissance lumineuse nécessaire à l'éclairage selon l'invention, est avantageusement répartie sur une pluralité de diodes. La multiplicité des diodes présente plusieurs avantages. Un premier avantage est, par exemple, de ne nécessiter l'utilisation que de diodes de puissance individuelle moindre. Même si la puissance des diodes disponibles dans le commerce s'est considérablement accrue, celles de puissance modérée restent avantageuses, ne serait-ce que par ce qu'elles restent moins coûteuses. Elles sont aussi avantageuses dans la mesure où l'efficacité lumineuse des diodes les plus puissantes n'est pas la meilleure. Il est donc préférable de choisir des diodes qui restent dans des domaines de puissance correspondant à la meilleure efficacité. Cette façon de faire répond aussi à la nécessité, dont il est question ci-après, de limiter les conséquences négatives qui s'attachent aux conditions thermiques de mise en œuvre des diodes.

Le rendement énergétique des diodes s'est aussi amélioré de façon significative au fil du temps. Pour une puissance donnée, la chaleur dégagée tend à diminuer dans les produits récents. Il reste que les meilleurs rendements énergétiques - c'est-à-dire la part de puissance électrique convertie en lumière - ne dépassent pas généralement 30%, et le plus couramment restent de l'ordre de 15 à 20%. Le dégagement de chaleur par effet joule est donc important.

La position des diodes dans le feuilleté ne facilite pas l'évacuation de la chaleur de fonctionnement. Pour une puissance élevée le fonctionnement d'une diode peut conduire à un échauffement local tel qu'il entraîne à terme une altération de la diode elle-même, des soudures au circuit d'alimentation, ou des éléments présents dans le toit feuilleté au contact ou à proximité immédiate de la diode, notamment des films à cristaux liquides. Si des feuilles de verre peuvent sans dommage supporter une élévation de température, d'autres constituants, notamment les cristaux liquides, nécessitent de maintenir la température dans des limites relativement strictes, le plus souvent inférieures à 100°C et même souvent inférieures à 85°C. Pour cette raison il est préférable selon l'invention de répartir la puissance totale nécessaire sur plusieurs diodes, chacune n'offrant qu'une fraction de cette puissance totale, ces diodes par ailleurs restant distantes les unes des autres.

L'expérience permet de déterminer l'évolution de la température d'une diode de puissance donnée dans un environnement tel que celui correspondant à un toit vitré feuilleté. Cette détermination tient compte de ce que la dissipation de la chaleur pour une diode s'effectue essentiellement par conduction par les matériaux au contact desquels la diode se trouve. Les matériaux intercalaires thermoplastiques du type PVB ne sont pas bons conducteurs, les feuilles de verre minéral ou organique ne le sont pas non plus. Il faut donc prendre soin de contenir la puissance des diodes utilisées. L'expérience montre que dans les conditions envisagées de mise en œuvre et de rendement énergétique des diodes disponibles, la puissance électrique de préférence ne doit pas dépasser 2w, et le plus souvent ne doit pas dépasser 1w ou même 0,5w. Dans la perspective de l'évolution vers de meilleurs rendement énergétique, autrement dit pour une part moindre de la puissance dissipée sous forme thermique, la puissance pourrait être accrue sans risque. La poursuite de cette évolution peut conduire à utiliser des diodes allant jusqu'à 4 ou même 5w.

A puissance électrique donnée, le flux lumineux des diodes peut varier dans une large mesure. Pour ne pas devoir multiplier de façon inutile le nombre des diodes nécessaires, et compliquer leur intégration dans le feuilleté, la puissance des diodes utilisées n'est pas inférieure à 15 lm/w et de préférence pas inférieure à 40lm/w et de façon particulièrement préférée pas inférieure à 75 lm/w. A l'inverse il est préférable de ne pas accroître de façon excessive leur puissance pour ne pas risquer un échauffement préjudiciable à leur longévité et/ou l'altération d'autres constituants du feuilleté. La puissance individuelle des diodes reste avantageusement inférieure à 100 lumens par watt électrique.

La puissance lumineuse requise peut varier sensiblement selon les véhicules et l'utilisation concernée (liseuse, éclairage d'ambiance ou d'accueil).

A titre indicatif, pour une liseuse l'éclairage requis est de l'ordre de 10 à 100 lux soit un flux lumineux sur l'objet éclairé, fonction de la configuration de l'habitacle du véhicule, qui n'est pas inférieur à 1 lm, de préférence pas inférieur à 2 lm et peut s'élever à 50 lm ou plus. Pour l'éclairage d'ambiance de l'habitacle la puissance lumineuse est normalement un peu moindre. L'éclairage ordinairement n'est pas inférieur à 1 lux et peut s'élever à 10 lux ou plus. Dans ces conditions le flux lumineux pour l'éclairage d'ambiance pour l'ensemble de l'habitacle peut aller de 2 à 60 lumens.

Un autre facteur influant sur l'éclairage, est lié à l'orientation du flux lumineux. Pour les diodes les plus usuelles l'émission se développe dans tout l'espace faisant face à la diode. Pour cela la diode comporte un élément réflecteur qui dirige le flux d'un seul côté. A noter que si des diodes peuvent être munies de moyens optiques qui concentrent et dirigent le flux lumineux émis, ces moyens sont inopérants quand ils sont inclus dans un milieu d'indice de réfraction voisin. Ces optiques constituées de matériaux synthétiques de type résine époxy, ne présentent pas de différence d'indice suffisante avec les matériaux thermoplastiques des intercalaires du feuilleté comme le polyvinyl-butyral ou les EVA. En conséquence, maîtriser la directivité du faisceau implique avantageusement l'utilisation de moyens supplémentaires. Des exemples de modalités de mise en œuvre sont présentés plus loin.

En pratique, pour les applications liseuses, la puissance des diodes est choisie en tenant compte de l'absorption des constituants du vitrage, de telle sorte que l'intensité lumineuse émise hors du vitrage dans un angle solide de 40°, normal au plan du vitrage, et par chaque diode, ne soit pas inférieur 10cd et de préférence pas inférieur à 15cd.

Compte tenu du flux lumineux émis par les diodes les plus appropriées disponibles, une liseuse comprend avantageusement de 2 à 20 diodes et de préférence de 6 à 15. Pour des diodes qui seraient plus puissantes, une seule d'entre-elles pourrait convenir, pour autant que son rendement soit suffisamment élevé. Pour l'éclairage général de l'habitacle, le nombre des diodes est fonction des dimensions de cet habitacle, il peut être bien supérieur au précédent. Rapporté à la surface du toit, le nombre de diodes distribuées sur ce toit, peut être avantageusement de l'ordre de 6 à 40/m$^2$, et le plus souvent de 10 à 30/m$^2$.

Qu'il s'agisse de liseuses ou d'éclairage d'ambiance, il est préférable de maintenir les diodes à une certaine distance les unes des autres pour faciliter la dispersion thermique dont elles sont le siège. Un espacement de 10mm au moins entre chaque diode est préféré, et avantageusement d'au moins 20mm.

Dans le conditionnement traditionnel le flux lumineux émis par les diodes se distribue sur un faisceau de large ouverture, qui peut atteindre 180°, et est d'au moins 120° selon l'enveloppe utilisée. L'éclairage d'ambiance ou d'accueil, s'accommode bien cette particularité lorsqu'elle est combinée avec une distribution régulière des diodes sur l'ensemble du toit.

Si le faisceau lumineux est largement ouvert, son intensité n'est pas uniforme dans toutes les directions. Elle est la plus forte dans la direction normale au plan du semi-conducteur de la diode, et décroît jusqu'à son ouverture la plus large. Cette distribution est détaillée plus loin à propos d'un exemple et de la figure qui s'y rapporte.

Même si l'intensité est la plus élevée dans une direction qui peut être choisie par l'emplacement des diodes dans le toit, cette «directivité» partielle intrinsèque peut ne pas être suffisante. La formation d'un flux dirigé de façon à obtenir un faisceau d'ouverture angulaire réduite peut être préférée.

Pour réduire l'ouverture du faisceau lumineux provenant d'une ou plusieurs diodes, il est avantageux de constituer en regard de celles-ci une optique convergente. Si cette optique est d'origine sur la diode, pour qu'elle reste efficace dans le feuilleté, son indice de réfraction doit différer de celui du matériau intercalaire dans lequel elle est insérée. Les produits les plus répandus disposent une optique en résine époxy dont l'indice de réfraction ne diffère pas sensiblement de celui des matériaux intercalaires usuels. Dans cette situation pour obtenir la convergence requise, l'optique est disposée non sur la diode mais sur la face du vitrage tournée vers l'habitacle, donc en position 4. L'optique en question dans son principe peut être partie intégrante de la feuille de verre elle-même par une modification de sa surface. Néanmoins pour des raisons d'économie de mise en œuvre il est avantageux de disposer l'optique sous forme d'une pièce rapportée qui est disposée en face des diodes. La pièce en question est conçue dans un matériau transparent qui peut être de verre, mais aussi le cas échéant d'un matériau polymère suffisamment transparent et résistant.

Pour minimiser la protubérance vers l'habitacle, résultant de la présence de cette optique rapportée, la forme lentille de Fresnel est préférée. Avec une telle optique il est possible de choisir l'angle d'ouverture du faisceau qui correspond le mieux avec la dimension de la zone que l'on souhaite éclairer. Pour des liseuses, une ouverture de 15 à 40° permet d'ajuster les dimensions de la zone éclairée compte tenu de la distance séparant la source de cette zone de lecture.

Pour un éclairage directionnel fixe, l'optique est disposée sur la face interne de la feuille de verre tournée vers l'habitacle et collée à cette face de façon non modifiable. Il est possible aussi d'envisager un faisceau orientable dont la direction puisse être modifiée par exemple par translation de l'optique sur la face de la feuille de verre. Un tel moyen impose la présence d'un dispositif qui nécessairement ajoute à la protubérance à la surface de la feuille.

Le faisceau lumineux peut être limité comme indiqué précédemment par une sorte de diaphragme associé par exemple à chaque diode. Cette façon de procéder, contrairement au dispositif optique, ne permet de récupérer qu'une fraction limitée du flux émis. Il est aussi possible de combiner l'usage du diaphragme et d'une optique telle qu'indiquée ci-dessus.

Avantageusement les vitrages selon l'invention sont composés de telle sorte que la lumière pénétrant par transmission et diffusion (transmittance) à l'état activé du film LC, mesurée (selon la norme ISO9050) ne soit pas supérieure à 30% de la lumière incidente et de préférence inférieure à 20% voire même 10%. Cette proportion peut être beaucoup plus réduite. Néanmoins les vitrages selon l'invention présentent avantageusement un taux global de transmission et diffusion (transmittance) à l'état activé du film LC, qui n'est pas inférieur à 3% et de façon préférée pas inférieure à 5% .

La transmission en question peut être réglée de diverses manières comme indiqué dans la suite, notamment par l'utilisation de feuilles qui absorbent une part de la lumière incidente, mais aussi partiellement par le film LC

Lorsque l'absorption est obtenue par les feuilles de verre et des intercalaires, globalement et/ou individuellement ces éléments peuvent être très absorbants. Mais une forte absorption de ce type peut aussi être avantageuse dans la composition de toits comprenant des éléments de commande de la transmittance, pour réduire encore la transmission lumineuse et énergétique et/ou par exemple pour contrôler la coloration du vitrage.

Le choix des films LC dans des toits feuilletés permet de satisfaire au besoin caractère privatif et à l'absence d'éblouissement.

Compte tenu de la structure des films LC et de leur mode d'action, pour une même charge de cristaux liquides par unité de volume de la partie active du film, il va de soi que l'effet diffusant croît avec l'épaisseur du film. Dans la pratique les produits disponibles commercialement conduisent à l'état non-activé à des diffusions très importantes de l'ordre de 95% et davantage, pour des épaisseurs généralement de moins de 0,5mm, ou même de moins 0,3mm. Des diffusions de cet ordre sont ordinairement suffisantes pour répondre à l'attente des constructeurs de sorte que des épaisseurs plus importantes apparaissent superflues.

A noter que dans la production des films LC, l'épaisseur intervient aussi dans le mode de conditionnement des constituants. A titre indicatif des produits de type PDLC («polymer dispersed liquid cristal») peuvent être relativement sensibles à la déformation sous pression. Pour prévenir des déformations indésirables le maintien de l'épaisseur peut être assuré par l'introduction dans le polymère de particules transparentes rigides formant autant de cales d'espacement. Il reste que pour ne pas altérer les propriétés optiques il est préférable de pouvoir limiter les épaisseurs et la présence en quantité de ces particules.

Une condition requise par les constructeurs est de faire en sorte, lorsque le film LC est soumis au champ électrique dans le mode activé, que la diffusion résiduelle, qualifiée également de «haze», ou voile, soit aussi réduite que possible pour que la perception visuelle à travers le vitrage, au moins sous certaines incidences s'approche de la transparence.

Le «haze» est mesuré selon la norme ASTMD1003. Dans l'utilisation de LC pour commander les caractéristiques lumineuses le flux lumineux transmis comprend la lumière diffusée et celle qui est éventuellement directement transmise. La mesure se fait avec sphère d'intégration pour tenir compte des spécificités de la lumière diffusée. L'ensemble mesuré est qualifié de «transmittance». La mesure de transmittance est effectuée selon la norme ISO 9050, la détermination est faite pour un illuminant D65 et pour un angle de 10°. De la même façon les mesures de réflexion sont faites suivant la même norme, même illuminant et même angle. La transmission énergétique est mesurée selon la norme ISO 13837.

Lorsque le film LC n'est pas activé pratiquement il n'existe pas de transmission lumineuse directe. Toute la lumière transmise, est pratiquement sous forme diffusée.

Compte tenu de ce que l'absorption lumineuse organisée notamment par les feuilles de verre et celles des feuilles intercalaires, réduit nécessairement la lumière transmise, la présence de «haze» du fait du film LC est moins sensible pour l'observateur. Pour cette raison des taux de «haze» qui seraient considérés comme rédhibitoires pour des vitrages clairs sont néanmoins acceptables dans l'application en tant que toit. Néanmoins, pour répondre à l'attente des constructeurs, le «haze» dans les toits selon l'invention, par le choix des films LC, est avantageusement maintenu inférieur à 12%, de préférence n'est pas supérieur à 10% et de façon particulièrement préférée pas supérieur à 8%, lorsque le vitrage est activé par l'application du champ électrique approprié. La mesure en question est faite dans une direction sensiblement orthogonale à la surface du vitrage.

Le taux de diffusion, de façon connue, est modulable en fonction du champ électrique appliqué. L'orientation des cristaux est directement dépendante de ce champ. L'accroissement du champ reste limité à ce que les films peuvent supporter sans risque de claquage, correspondant à un court-circuit entre les électrodes qui recouvrent le matériau fonctionnel constitué essentiellement de polymère contenant les cristaux liquides. La tension supportable peut dépendre en partie de l'épaisseur du film. Pour les raisons indiquées précédemment cette épaisseur est limitée. Dans ces conditions la tension supportable pour les films usuels est de l'ordre de 220v.

Par ailleurs, en pratique pour les films disponibles dans le commerce, la diffusion n'est plus réduite de façon sensible au-delà d'un seuil qui ne dépasse pas des tensions appliquées de l'ordre de 110v. Pour la détermination du haze résiduel selon l'invention, la mesure est faite à la valeur de 65v en mode alternatif de fréquence 50Hz. Les valeurs de haze indiquées ci-dessus sont mesurées dans des conditions extérieures usuelles, notamment de température ambiante.

Les films LC conservent toujours une diffusion résiduelle comme indiqué ci-dessus. Si cette diffusion doit être limitée dans la direction orthogonale à la surface du vitrage, elle reste aussi de préférence relativement faible sous des incidences qui s'écartent peu de la normale. Lorsque l'on s'écarte de la direction orthogonale, la diffusion tend à s'accroître. A l'état activé, la diffusion reste de préférence selon l'invention inférieure à 20%, et de façon particulièrement préférée inférieure à 15% pour un angle d'observation allant jusqu'à 20° par rapport à la normale à la surface.

Comme indiqué ci-dessus les diffusions résiduelles ne peuvent être totalement éliminées, mais leur perception est d'autant moins gênante que la lumière est en partie absorbée par les différents éléments constituant le vitrage. Le film LC contribue pour une partie limitée à cette absorption qu'il soit activé ou non. Le reste de l'absorption est principalement le fait des feuilles de verre et éventuellement des feuilles intercalaires.

Les systèmes électro-commandes à cristaux liquides en configuration «transparente» contribuent à l'absorption mais de façon limitée. Si la transmission souhaitée, pour les raisons exposées plus loin, doit être sensiblement moindre, les feuilles de verre et intercalaires doivent participer de manière significative à la réduction de la transmission. Cette absorption dans ce cas peut être encore très importante. Elle est de préférence d'au moins 60% ou plus. L'absorption en question intervient que le dispositif soit à l'état «transparent» ou «diffusant». A l'état transparent elle contribue à la réduction de la transmission lumineuse et énergétique, participe éventuellement au masquage des éléments contenus dans le vitrage, et au masquage de la diffusion résiduelle.

Si les feuilles de verre utilisées pour constituer le feuilleté peuvent être en principe de même composition et éventuellement de même épaisseur, ce qui peut rendre la mise en forme préalable plus facile, les deux feuilles étant par exemple bombées simultanément, il est préférable pour les questions de protection du film à cristaux liquides qu'elles ne présentent pas les mêmes propriétés en ce qui concerne l'absorption.

Le choix des feuilles de verre est de préférence tel que la lumière transmise comme la lumière réfléchie soit de couleur aussi neutre que possible. Globalement le vitrage présente une coloration grise ou légèrement bleutée.

La présence éventuelle d'intercalaires de couleur participe à l'absorption lumineuse. Leur utilisation est envisagée pour des vitrages dont les feuilles de verre globalement ne seraient pas suffisamment absorbantes. Cette situation se rencontre notamment lorsque la protection du film à cristaux liquides implique l'utilisation d'une feuille de verre tournée vers l'extérieur faiblement absorbante.

La présence de feuilles colorées dans les vitrages comportant un film LC contribue aussi à restituer des couleurs qui soient satisfaisantes. Le plus souvent, les films LC tendent à présenter une coloration légèrement jaune en particulier en réflexion. Il est souhaitable, pour éviter cette apparence perçue par les passagers du véhicule, de faire en sorte que la feuille de verre, et éventuellement une feuille intercalaire disposée entre le film LC et cette feuille de verre tournées vers l'habitacle, soit colorée de façon à masquer cette nuance jaune. Le plus souvent l'on choisit une feuille de verre de coloration neutre, de préférence gris ou gris bleuté. De la même manière une feuille intercalaire disposée au-dessus du film LC peut masquer la coloration due au film LC vu de l'extérieur du véhicule.

Le choix de couleur des feuilles verre et/ou d'intercalaires est tel que la coloration en réflexion dans l'habitacle conduise dans le système CIELab (illuminant D65 sous 10°) à des valeurs telles que :

$$10 < L^* < 55, \ -10 < a^* < 3 \ et \ -10 < b^* < 5$$

et de préférence :

$$-6 < a^* < 0 \ et \ -6 < b^* < 0$$

Les toits selon l'invention, doivent encore avantageusement répondre à des exigences en ce qui concerne l'importance de la réflexion intérieure. Celle-ci, quel que soit l'état dans lequel est le film LC, est de préférence inférieure à 15%, et avantageusement inférieure à 10%

Pour des raisons non seulement d'esthétique, mais aussi de sécurité, les toits ne doivent pas présenter une réflexion excessive vers l'extérieur dans le domaine visible, que ce soit à l'état activé ou non. Elle est de préférence inférieure à 20%, et de façon particulièrement préférée inférieure à 15%.

Les constructeurs, pour des raisons d'esthétique cette fois, demandent aussi que la réflexion à l'extérieur soit relativement neutre, autrement dit que la couleur apparente des toits ne soit pas trop accentuée. En particulier les teintes pourpres doivent être évitées. Des nuances grises ou bleutées peuvent s'harmoniser avec les teintes les plus répandues pour les véhicules.

Selon les données colorimétriques CIELab (illuminant D 65 sous 10°), la couleur en réflexion vers l'extérieur, à l'état activé ou non, est de préférence dans les limites suivantes :

$$10<L^*<60, \quad -12 < a^* < 3 \text{ et de préférence} \quad -7<a^*<2$$
$$-12 < b^* < 5 \text{ et de préférence} \quad -2<b^*<1$$

La couleur en transmission doit être aussi maîtrisée. A l'état non activé, la transmission étant très réduite la couleur est peu sensible. La transmission à l'état activé est de préférence telle que:

$$15<L^*<75, \quad -10 < a^* < 5 \text{ et de préférence} \quad -8 < a^* < 0$$
$$-10< b^* < 3 \text{ et de préférence} \quad -5< b^* < 3.$$

L'indice de rendu des couleurs dans la lumière transmise est au moins de 85 et de préférence de 90.

En pratique il est particulièrement souhaité que la transmission énergétique globale pénétrant dans l'habitacle, soit aussi restreinte que possible notamment lorsque le véhicule est en stationnement, et donc que le film LC n'est pas activé. Selon l'invention la transmission énergétique du vitrage dans ces conditions est avantageusement inférieure à 10% et de préférence inférieure à 8% voire même inférieure à 5%. A l'état activé, la transmission énergétique est un peu plus élevée mais reste limitée du fait des autres constituants du vitrage.

Pour rester dans des conditions de transmission énergétique adéquates, en dehors des éléments déjà précisés, les vitrages selon l'invention comprennent avantageusement des moyens filtrant sélectivement les infrarouges. Des filtres de ce type sont notamment ceux comportant une ou plusieurs couches minces métalliques, à base d'argent, associées à des couches minces diélectriques qui contribuent à la sélectivité du filtre. Ces ensembles de couches sont disposés soit sur une feuille support, notamment de PET, insérée dans le feuilleté, soit par application directe sur la feuille de verre. Dans les deux cas ce filtre est situé dans le feuilleté au-dessus du film LC, pour contribuer de façon importante à la protection de ce film.

Le choix du système de couches est avantageusement celui de systèmes à plusieurs couches d'argent pour obtenir un filtre efficace et qui permette le contrôle de la coloration notamment en réflexion. Un ensemble de couches particulièrement efficace est tel que décrit dans la demande WO2011/147875. Dans cette demande le système préconisé comporte trois couches d'argent et des couches diélectriques, l'ensemble étant choisi, notamment les épaisseurs des couches d'argent, de telle sorte que la coloration en réflexion soit satisfaisante même sous de faibles incidences d'observation.

Une particularité des films à cristaux liquides est en effet leur sensibilité à la température. Au-delà de 80, ou même 60°C, ils peuvent ne plus réagir aux variations de champs électriques appliqués. Cette altération est réversible tant que les températures n'atteignent des niveaux de beaucoup supérieurs. La température des toits exposés à un ensoleillement intense peut atteindre ces valeurs d'autant plus facilement que leurs constituants sont plus absorbants.

Pour prévenir l'échauffement on s'efforce donc de placer le plus tôt possible sur le trajet de la lumière incidente les filtres infrarouges dont il est question. Pour minimiser l'absorption des infrarouges, la première feuille de verre exposée est de préférence de verre clair ou même extra-clair. Les systèmes réfléchissant les infrarouges sont aussi de préférence appliqués directement sur la feuille de verre. Ainsi le rayonnement incident réfléchi ne fait que traverser deux fois la feuille de verre clair et conduit à une augmentation faible de la température.

Les composants des films LC peuvent être dégradés par une exposition excessive aux UV. Le choix des intercalaires permet de limiter de façon considérable cette exposition. C'est le cas en particulier des d'intercalaires de PVB, qui par nature font écran aux UV ne laissant passer qu'une très faible proportion de ceux-ci. Pour les films PVB usuels de 0,38mm d'épaisseur plus de 95% des UV sont absorbés. Cette proportion peut dépasser 99% par adjonction d'agents supplémentaires absorbants («PVB UV cut»). Des polymères à base d'éthylène vinyl-acétate (EVA) sont aussi proposés qui renferment des composants leur conférant une très faible transmission des UV.

La feuille de verre tournée vers l'habitacle peut aussi être exceptionnellement de verre clair. Elle est le plus souvent absorbante et contribue à la réduction de la transmission énergétique globale. Lorsque sa transmission est limitée, elle permet de masquer à la vue des passagers, au moins en partie, les éléments non transparents présents dans le vitrage. C'est le cas par exemple des diodes elles-mêmes lorsqu'elles ne sont pas activées, mais aussi de tout élément incorporé dans le vitrage et qui ne s'étend pas de façon uniforme sur la totalité de sa surface.

De façon préférée la feuille de verre tournée vers l'intérieur de l'habitacle est fortement absorbante. La lumière émise par les diodes est en partie absorbée. De manière préférée la lumière émise par les diodes, absorbée dans le vitrage n'est pas de préférence supérieure à 50% et de préférence pas supérieure à 40%.

Pour la constitution d'un éclairage de lecture la lumière émise, indépendamment des modifications dues au passage dans le vitrage, est de préférence blanche ou très légèrement teintée. Les coordonnées colorimétriques (x,y) dans le système CIE 1931, caractérisant l'éclairage, compte tenu d'une part de l'émission des diodes mais également d'autre part de la transmission par des intercalaires et la feuille de verre tournée vers l'habitacle, sont telles qu'elles s'inscrivent avantageusement dans un périmètre défini par les points de coordonnées : (0,2600;0,3450), (0,4000;0,4000), (0,4500;0,4000), (0,3150;0,2900), (0,2350 ;0,2000), périmètre incluant à la fois des lumières dites froides et des lumières chaudes, et de préférence dans le périmètre défini par les points de coordonnées qui vise plus précisément des lumières très faiblement colorées.

Dans la préparation des toits selon l'invention de manière générale il convient de considérer les capacités des éléments constitutifs à supporter les traitements qui conduisent à la mise en forme et à l'assemblage du vitrage. Les toits des véhicules présentent en général des courbures relativement peu accentuées à l'exception éventuellement de celles des bords de ces vitrages. La mise en forme de feuilles de verre minéral comporte, au moins pour l'une d'entre elles et le plus souvent pour les deux, un traitement qui nécessite un passage à haute température (650-700°C) conduisant à un ramollissement du verre.

Une alternative consiste à procéder à la formation d'un vitrage feuilleté associant une feuille bombée relativement épaisse à une feuille plane de moindre épaisseur qui est forcée mécaniquement pour épouser la courbure de la feuille épaisse. La mise en œuvre de cette technique n'est envisagée que dans l'hypothèse où les courbures imposées restent relativement modestes compte tenu des contraintes supportables notamment par les feuilles de verre. Ce type d'assemblage est par exemple tel que décrit dans la demande BE20110415 (déposée le 4/7/2011) ou encore dans la demande BE20120036 (déposée le 16/1/2012). Dans le cas de ce type d'assemblage le système de couches même relativement fragile, s'il est placé sur la feuille plane, n'est exposé qu'à la température de passage à l'étuve qui conclut l'assemblage du feuilleté.

Pour ce mode d'assemblage la feuille de verre plane est avantageusement une feuille de verre trempé chimiquement.

En pratique les films LC sont sensibles à l'élévation de température, Mais les traitements thermiques auxquels leur assemblage dans le feuilleté les conduit, ne les altèrent pas. Le traitement en question est le plus souvent celui de passage à l'étuve sous pression, au plus à 120°C.

Il est apparu aux inventeurs que l'assemblage d'un film LC dans un vitrage feuilleté introduit souvent une modification concernant la diffusion résiduelle. Sans que le mécanisme ait été étudié de manière précise, il a été constaté une réduction du haze résiduel dans le feuilleté par rapport à celui observé sur le film seul. Cette réduction limitée tient peut-être à une modification de l'état des surfaces externes, celle du film seul étant constitué des parois des électrodes (film PET le plus souvent), alors que dans le produit feuilleté les surfaces externes sont celles des feuilles de verre dont la rugosité est très réduite.

L'insertion du film LC dans le feuilleté est de préférence facilitée par la mise en place d'un logement aménagé dans la ou les feuilles intercalaires.

Les conditions d'introduction des diodes, comme celle des films à cristaux liquides, doivent tenir compte de leur relative fragilité aussi bien aux températures élevées qu'aux contraintes mécaniques. La nature des diodes permet normalement de supporter les températures d'assemblage pour autant qu'elles ne sont pas imposées sur de très longues périodes et/ou dans des conditions d'environnement chimique agressif. La température en question nécessite néanmoins quelques précautions en ce qui concerne le choix des matériaux assurant la connexion entre les diodes et leur circuit d'alimentation. Cette connexion est sensible à la chaleur notamment lorsqu'elle est effectuée au moyen de colles conductrices. L'usage de soudures permet le cas échéant de supporter des températures plus élevées.

Les contraintes mécaniques sont liées principalement aux pressions résultant de l'assemblage. Pour minimiser l'effet de ces pressions, il est nécessaire de disposer les diodes de telle sorte qu'elles s'insèrent dans le matériau des intercalaires sans effort excessif.

Une première condition est d'assurer que l'épaisseur d'intercalaire soit suffisante à l'insertion des diodes.

Les diodes usuelles avec leur enveloppe («packaging») ont ordinairement des hauteurs de moins de 1,5mm et le plus souvent de moins de 1mm, voire moins de 0,7mm. Les hauteurs en question sont parfaitement compatibles avec l'épaisseur des intercalaires traditionnels utilisés. A titre indicatif les feuilles de PVB sont commercialement disponibles en épaisseur de 0,76mm et 0,38mm. En outre il est classique dans ces vitrages feuilletés d'associer plusieurs feuilles intercalaires en fonction des besoins. Selon l'invention l'épaisseur des intercalaires est donc au moins égale à la hauteur des diodes. Par précaution supplémentaire l'épaisseur d'intercalaire destiné à envelopper les diodes est choisie supérieure à la hauteur des diodes, par exemple 1,5 fois cette hauteur ou davantage sans excéder ce qui est nécessaire pour ne pas accroître inutilement l'épaisseur totale du vitrage.

La résistance mécanique des diodes, et plus encore de leur liaison avec le circuit d'alimentation, doit permettre leur insertion dans le matériau des intercalaires au cours de l'assemblage. Le packaging ordinaire de céramique est bien résistant. Le ramollissement du matériau intercalaire au passage dans l'étuve est habituellement suffisant pour permettre l'insertion des diodes par simple pression.

La mise en œuvre décrite précédemment peut être remplacée par celle moins usuelle dans laquelle l'intercalaire serait constitué à partir d'un matériau appliqué sous forme fluide à température ambiante, avant de procéder à son durcissement, par exemple par réticulation, une fois les différents éléments mis en place.

Le circuit d'alimentation des diodes peut être constitué de différentes manières. Une d'entre elles consiste à disposer des fils minces qui sont avantageusement introduits dans l'intercalaire avec les diodes comme décrit dans EP1979160. La présence de fils très fins n'est pratiquement pas perceptible dans la mesure où les vitrages présentent systématiquement une transmission lumineuse réduite. La difficulté principale pour ce mode de réalisation consiste dans la mise en place des diodes dans l'intercalaire.

Il est préféré, selon l'invention de disposer le circuit d'alimentation et les diodes sur un support distinct des matériaux intercalaires. Il peut s'agir d'une des feuilles de verre du feuilleté, pour autant que cette feuille n'ait pas à subir de traitement thermique du type mis en œuvre pour le bombage. Une façon consiste par exemple à bomber une feuille revêtue d'une couche conductrice. Dans cette couche, le circuit d'alimentation est formé, avant ou après bombage. Une fois la feuille bombée les diodes sont disposées aux emplacements appropriés sur le circuit d'alimentation. La mise en place des diodes sur un substrat incurvé reste cependant une opération qui se prête difficilement à automatisation.

L'alternative évoquée ci-dessus, consistant à procéder à la formation d'un vitrage feuilleté associant une feuille bombée relativement épaisse à une feuille plane de moindre épaisseur qui est mécaniquement forcée pour épouser la courbure de la feuille épaisse évite la difficulté de devoir placer les diodes sur une feuille courbée. La mise en œuvre de cette technique n'est envisagée que dans l'hypothèse où les courbures imposées à la feuille plane restent relativement modestes compte tenu des contraintes supportables.

Pour que les diodes conduisent à un éclairement aussi intense que possible, elles doivent être le plus proche possible de la feuille de verre tournée vers l'habitacle. Dans le cas envisagé de la feuille plane relativement peu épaisse portant les diodes, celles-ci se trouvent nécessairement sur la face convexe. Dans cette position la couche conductrice d'alimentation des diodes supporte des contraintes en extension. Ceci n'entraîne pas de difficultés particulières en raison de ce que les courbures restent faibles et les contraintes limitées. Une particularité néanmoins concerne le type de diodes utilisé. Il est en effet nécessaire de diriger le flux lumineux du côté correspondant au support des diodes constitué par la feuille de verre. Dans ce cas les diodes utilisées sont nécessairement du type «reverse».

Dans le mode d'assemblage présenté ci-dessus, la couche conductrice servant à la confection du circuit d'alimentation est formée sur la feuille mince. L'application des couches n'est pas chose aisée lorsque les feuilles de verre concernées sont très peu épaisses (par exemple de 0,8mm ou même de l'ordre de 0,4mm). Les techniques habituellement utilisées pour constituer ces couches induisent des défauts notamment en raison de la difficulté qui est de bien maîtriser la planéité des feuilles au stade de l'application des couches.

Compte tenu de la difficulté de manipuler des feuilles relativement minces de grandes dimensions sur lesquelles les diodes sont préalablement fixées, il est possible de procéder d'une manière différente. Il s'agit d'introduire dans le feuilleté un élément indépendant des feuilles de verre et des intercalaires proprement dits. Dans ce mode le circuit et les diodes sont disposés sur un élément support de faible épaisseur qui est inséré dans le feuilleté. Les dimensions de cet élément support peuvent être relativement petites par rapport à la surface du toit. Elles se limiteront avantageusement à ce qui est nécessaire pour la disposition appropriée des diodes. Pour une liseuse par exemple le support peut se limiter à une surface de l'ordre de quelques décimètres carrés ou moins.

Le support est avantageusement constitué par une feuille souple polymère. La feuille en question présente avantageusement une résistance à la déformation suffisante pour maintenir l'orientation des diodes lors de leur insertion dans le matériau intercalaire. La feuille peut être composée de plusieurs matériaux superposés. Elle peut notamment comprendre une feuille de poly-téréphtalate d'éthylène glycol (PET) ou analogue servant de support au circuit conducteur. Des feuilles de ce type revêtues d'un système de couches conductrices sont disponibles dans le commerce. Pour ces éléments polymères la fixation des diodes ne peut se faire que sans élévation notable de la température en raison de fragilité du matériau en question aux températures élevées. La fixation est faite par exemple au moyen de colle conductrice. Les feuilles PET sont très résistantes à l'étirement, mais sont très souples. Elles sont donc avantageusement associées à une feuille d'un matériau moins facilement déformable en flexion pour faciliter la mise en bonne position des diodes.

L'élément support du circuit et des diodes peut aussi être avantageusement constitué d'une lame de verre de faible épaisseur. Compte tenu des dimensions, qui peuvent être limitées, la lame peut être d'épaisseur particulièrement petite, par exemple de 0,5mm ou moins. Des feuilles d'épaisseur aussi faible présentent l'avantage d'être facilement déformables pour s'adapter aux courbures du toit feuilleté. Pour améliorer la résistance à la flexion ces feuilles sont avantageusement trempées chimiquement. Par ailleurs les éléments en verre peuvent supporter des températures compatibles avec la fixation par soudure des diodes au circuit.

Les supports insérés dont il est question ci-dessus sont de matériaux essentiellement transparents. Ils ne modifient pas sensiblement les caractéristiques de transmission lumineuse du toit. En raison des dimensions modestes de ces supports, et dans l'hypothèse où il est acceptable d'avoir des parties non transparentes, il est possible d'utiliser des matériaux traditionnels dans la constitution de circuits électronique du type PCB («printed circuit board»), ces produits présentant l'avantage d'être très peu coûteux.

L'insertion du support des diodes est de préférence facilitée par la mise en place d'un logement aménagé dans la ou les feuilles intercalaires. Ce mode est traditionnellement proposé pour l'insertion d'éléments variés, notamment de cellules photovoltaïques dans des vitrages feuilletés, y compris dans des toits comme dans EP1171294.

La composition des circuits d'alimentation doit satisfaire à plusieurs exigences. En premier si comme il est préféré pour conserver au mieux l'uniformité de transparence on utilise un support des diodes qui est transparent, le circuit d'alimentation sera lui-même de préférence tel qu'il ne modifie pas sensiblement la transmission lumineuse, ou, plus précisément, que sa présence reste pratiquement indécelable visuellement. Dans ce cas le circuit est par exemple constitué dans un revêtement conducteur essentiellement transparent. Mais des fils très fins peuvent aussi être utilisés.

Pour les circuits transparents on utilise avantageusement des couches minces conductrices du type dit «TCO» («thin conductive oxide»), ou des systèmes comportant au moins une couche métallique. Ces couches conductrices se présentent sous de très faibles épaisseurs et sont utilisées dans de nombreux domaines, dont en particulier celui des cellules photovoltaïques. Pour les couches d'oxydes, la conductivité est moins élevée qu'avec les couches métalliques ce qui conduit ordinairement à des épaisseurs sensiblement plus importantes. Dans tous les cas, même pour des épaisseurs de plusieurs dizaines de nanomètres, l'incidence limitée sur la transmission lumineuse n'est pas gênante compte tenu de la transmission globale très faible du vitrage lui-même.

Le choix des couches conductrices doit aussi tenir compte de leurs caractéristiques électriques. Les couches d'oxydes conducteurs ont ordinairement des conductivités relatives faibles, autrement dit des résistances non négligeables. Les couches d'oxydes conducteurs ont par exemple une résistance de l'ordre de $10\Omega/\square$ ou plus. Les systèmes comportant des couches métalliques ont des résistances moindres, de l'ordre de 1 à $5\Omega/\square$, mais présentent une certaine fragilité qui fait qu'en dépit de leurs qualités les couches d'oxydes conducteurs restent préférées.

Dans la pratique il est important de maintenir la résistivité de la couche à un niveau suffisamment bas pour ne pas avoir un effet Joule trop important lors de l'alimentation des diodes. Comme pour les diodes, il faut éviter un échauffement complémentaire d'autant plus important que la résistance est plus élevée, même si la chaleur produite se distribue sur toute la surface occupée par la couche conductrice.

Le circuit électrique alimentant les diodes est formé sur la couche conductrice de manière traditionnelle. Pour un support constitué d'une mince lame de verre, un mode usuel consiste par exemple au découpage de la couche préalablement recouvrant uniformément le support. Cette découpe est avantageusement effectuée par ablation au moyen d'un laser. Pour des supports constitués de films minces comme ceux de PET, le circuit est de préférence constitué par des techniques d'impression.

Disposer sur un véhicule d'un toit vitré vise au moins en partie un objectif de nature esthétique autant que fonctionnelle. Pour cette raison il est préférable que tous les moyens associés à ces toits contribuent à la réalisation de cet objectif. La présence de moyens d'éclairage inclus dans le toit doit s'accompagner nécessairement d'une alimentation spécifique et de commandes de ces moyens.

L'alimentation des diodes requiert une tension spécifique. Comme indiqué précédemment cette tension est de l'ordre de quelques volts (2 à 4v le plus souvent). Elle doit nécessairement comprendre des moyens d'ajustement de la tension qui alimente les autres organes du véhicule, ceux-ci selon qu'il s'agit de voitures ou de gros utilitaires est de l'ordre de 12 à 14v ou de l'ordre de 48v. Les moyens de conversion de la tension, même miniaturisés, ne peuvent être inclus dans le feuilleté du vitrage. Dans un souci de rassembler tous les éléments participant à la fonction le, ou les transformateurs nécessaires peuvent être disposés à proximité du vitrage. Avantageusement le transformateur est disposé sous la zone émaillée qui masque les bords du vitrage.

La commande de l'éclairage peut comprendre de simples interrupteurs. Dans les modes traditionnels les interrupteurs sont situés à proximité immédiate des moyens d'éclairage pour éviter des circuits complexes et faciliter l'identification du moyen actionné. Les interrupteurs traditionnels ne répondent pas au souci de transparence à l'origine du choix des toits vitrés.

L'invention propose d'utiliser des moyens de commande des diodes qui soient également essentiellement transparents. A cet effet l'invention propose d'utiliser des interrupteurs dont la mise en œuvre soit déclenchée par l'intermédiaire de relais actionnés par une impulsion liée à une grandeur électrique. De préférence l'interrupteur utilisé est du type capacitif. Ce mode est celui qui permet d'utiliser au mieux la structure même des éléments inclus dans le toit avec les diodes.

Le capteur est de préférence sans contact direct. Dans ce cas le capteur est situé à l'intérieur du vitrage. Avantageusement le capteur est incorporé à la couche conductrice dans laquelle le circuit d'alimentation des diodes est constitué. Ce capteur est par exemple constitué par une zone délimitée indépendante du circuit d'alimentation des diodes. La modification de capacité est alors induite indirectement par modification du champ électrique en approchant la main de l'emplacement de l'électrode dans le vitrage. Le fait qu'une feuille de verre soit interposée limite la modification induite et par suite nécessite que le seuil de détection soit abaissé conduisant éventuellement à une sensibilité accrue aux déclenchements parasites.

Il convient notamment dans le réglage de la sensibilité de faire en sorte que le seuil de déclenchement soit supérieur à celui qui correspond par exemple à la présence d'eau sur la feuille de verre extérieure. Le système réfléchissant les infrarouge disposé au-dessus du film à cristaux liquides et recouvrant l'ensemble du vitrage constitue un écran faisant obstacle à ces déclenchements parasites d'autant plus efficace qu'il sera mis à la terre.

L'alimentation en courant alternatif du film à cristaux liquides est susceptible également d'induire un signal parasite conduisant à un fonctionnement très réduit des diodes. La mise à la terre de la couche conductrice du film à cristaux liquides tournée vers celle alimentant les diodes permet d'éviter ce fonctionnement parasite.

Dans les modalités de réalisation des circuits conducteurs alimentant les diodes, il est préféré que ceux-ci soient peu ou pas discernables dans le toit. Si un capteur capacitif est constitué, comme indiqué ci-dessus, dans la couche conductrice, celle-ci n'est pas non plus facilement discernable. La localisation de cet «interrupteur» par l'utilisateur peut être facilitée de manière tactile. La présence de moyens protubérants, notamment de type lentille de Fresnel à la surface de la face intérieure du toit, mais un simple dépoli peut suffire. Il est aussi possible de localiser le capteur de manière optique par adjonction d'une diode de très faible puissance alimentée de manière permanente dès que le contact du véhicule est actionné, ou encore de façon analogue en maintenant le fonctionnement de la liseuse mais à un niveau de fonctionnement très faible.

Si l'allumage des diodes est avantageusement commandé par un interrupteur capacitif intégré au vitrage, il en est de même de la commande du film LC. Cette commande par mesure de simplification est avantageusement introduite dans le vitrage de la même manière que celle commandant l'éclairage. Autrement dit les électrodes du capteur capacitif sont formées dans une couche conductrice transparente appliquée sur un support également transparent. Il va de soi que le motif défini dans la couche conductrice est relativement plus simple dans la mesure où il n'y a pas de diodes d'éclairage alimentées à partir de cette couche conductrice. Eventuellement comme pour l'interrupteur de l'éclairage, il est possible de disposer un élément signalent la position de cet interrupteur, autrement difficilement décelable. Un mode préféré consiste en par présence d'une diode de positionnement alimentée aussi à partir de la couche conductrice constituant les électrodes. Cette diode compte tenu de son rôle est de faible puissance.

L'invention est décrite de manière détaillée en se référant aux exemples illustrés par les planches de dessins dans lesquelles :

- la figure 1 représente schématiquement en perspective éclatée un ensemble partiel d'éléments entrant dans la constitution d'un toit selon l'invention ;

- la figure 2 présente de façon schématique en coupe, selon l'axe A-A de la figure 1, les différents éléments après leur assemblage ;

- la figure 3 montre un détail du film LC de la figure 1 ;

- la figure 4 est un schéma en coupe d'un support des diodes ;

- la figure 5 représente de manière schématique un circuit d'alimentation pour 8 diodes ;

- la figure 6 est un schéma illustrant une distribution de l'intensité lumineuse dans un faisceau émis à partir d'une diode ;

- la figure 7 représente un mode de contrôle du faisceau lumineux ;

- la figure 8 présente sur le diagramme de colorimétrie CIE 1931 les périmètres préférés des couleurs du faisceau lumineux émis par les diodes.

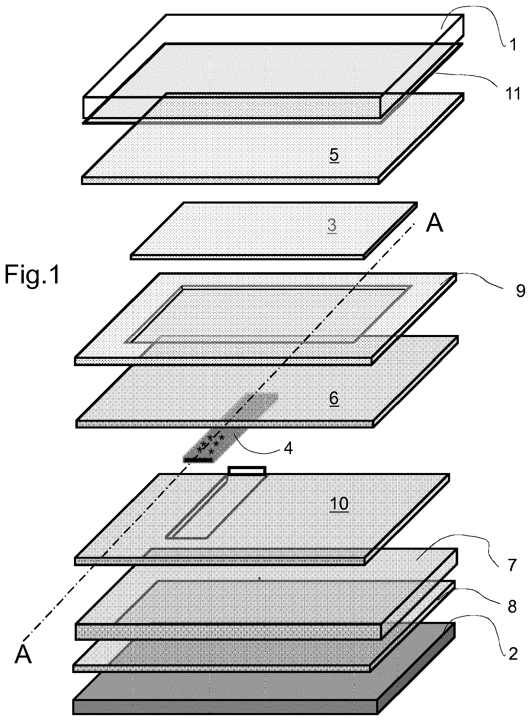

L'ensemble des éléments de la figure 1 constitue un exemple de réalisation selon l'invention. Les éléments sont présentés tels qu'avant leur assemblage. Sur cette figure les courbures des feuilles ne sont pas reproduites par souci de clarté. Dans la pratique les toits, vitrés ou non, présentent des courbures lesquelles sont ordinairement plus accentuées sur les bords à l'endroit de la fixation à la carrosserie pour un accostage choisi pour son «design», l'aérodynamique et l'aspect «flush», correspondant à une bonne continuité de surface entre les éléments contigus.

Le vitrage schématisé à la figure 1 comprend deux feuilles de verre, externe 1, et interne 2. Pour les raisons exposées précédemment la feuille 1 est de préférence de verre clair ou même extra clair pour minimiser son absorption énergétique. La feuille interne à l'inverse est de façon préférée fortement colorée. Elle participe à la limitation de la transmission lumineuse pour atténuer la perception du voile résiduel inévitable lorsque le film à cristaux liquide est dans son état transparent.

Dans l'exemple de la figure 1 la feuille 1 est le support d'un ensemble 11 de couches réfléchissant les infrarouges. Pour l'efficacité de ce filtre IR on préfère un empilage de couches d'argent et de diélectriques, comportant deux ou même trois couches d'argent comme décrit dans WO 2011/147875.

Pour la feuille 2, fortement colorée, on utilise par exemple un verre gris tel que décrit dans le brevet FR2738238 ou dans le brevet EP1680371, ou un verre gris à nuance verte tel que décrit dans EP 887320, ou à nuance bleue comme dans EP1140718.

A la figure 1, les feuilles de verre sont présentées sans les motifs émaillés qui traditionnellement sont utilisés pour masquer les bords des vitrages. Des émaux de ce type seraient par exemple disposés sur la face interne de la feuille 1, donc en position 2, dissimulant l'ensemble des collages et connexions localisés au bord du vitrage. Les émaux de masquage peuvent aussi être en position 4, autrement dit sur la face du vitrage exposée à l'intérieur de l'habitacle. Il est aussi possible de disposer les masquages en position 2 et en position 4.

Le vitrage selon l'invention comprend au moins deux éléments fonctionnels distincts, d'une part un film à cristaux liquides 3 et d'autre part au moins un ensemble 4 comportant des diodes d'éclairage. Cet ensemble dans la forme présentée est construit sur un support portant une couche conductrice formant le circuit d'alimentation d'une multiplicité de diodes électroluminescentes.

Des feuilles de matériaux intercalaires sont également présentes. Ces feuilles dont le rôle général est l'assemblage des différents composants présentent certaines spécificités.

Une feuille 9 constitue un cadre pour le film à cristaux liquides 3, celui-ci ne s'étendant pas jusqu'au bord du vitrage. Le cadre correspond à la dimension du film de façon que celui-ci s'insère de manière ajustée. Il protège le matériau sensible contenant les cristaux en question, d'un contact avec le milieu extérieur au vitrage, notamment de l'humidité. Ce cadre 9 est d'une épaisseur voisine sinon identique à celle du film lui-même de sorte que l'insertion du film 3 dans le vitrage feuilleté n'entraîne pas localement de différence d'épaisseur susceptible de provoquer des délaminations.

Une feuille 10 est aménagée de sorte qu'elle laisse un logement dans lequel s'insère l'ensemble 4 portant les diodes lorsqu'il est d'une certaine épaisseur. La figure présente un seul ensemble 4 pour illustrer aussi simplement que possible la construction du vitrage. En pratique pour des moyens constituant des liseuses, plusieurs ensembles analogues sont distribués dans le toit du véhicule.

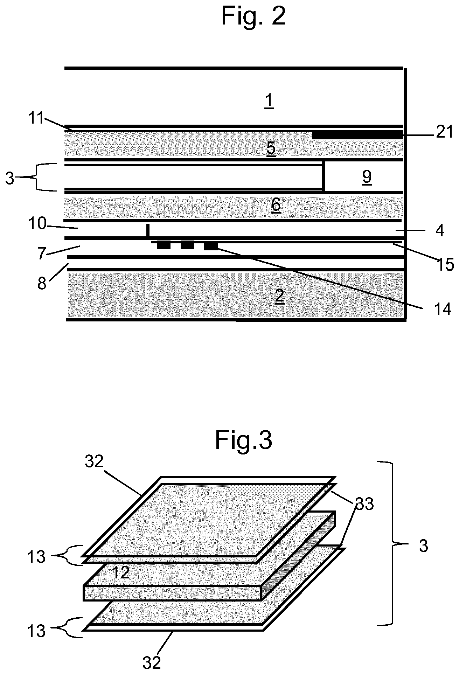

Dans l'exemple présenté, le support des diodes 6 est constitué par une lame de verre clair 4 (par exemple de 0,45mm d'épaisseur). Les diodes 14 sont soudées ou collées sur le circuit d'alimentation constitué dans une couche d'oxyde conducteur 15 (fig.2). La hauteur des diodes sur la lame de verre 4 est par exemple de 0,86mm.

La feuille intercalaire 5 est avantageusement une feuille choisie pour son rôle d'écran aux UV. Il s'agit par exemple de PVB spécifique anti-UV. Par ailleurs la feuille de verre 1 étant avantageusement de verre clair, la couleur du vitrage vu de l'extérieur peut être déterminée par celle de la feuille intercalaire 5. Il est possible notamment de choisir l'intercalaire pour harmoniser la couleur du toit et celle du reste de la carrosserie.

La structure du film à cristaux liquide est le plus usuellement du type présenté à la figure 3. Il comporte la couche fonctionnelle 12 de cristaux liquides encadrée par les deux électrodes 13 qui permettent l'application du champ électrique. Les électrodes 13 sont avantageusement constituées d'un support souple, par exemple une feuille mince de PET 32, revêtue de couches minces transparentes conductrices de l'électricité 33. Ces couches sont par exemple d'ITO («indium tin oxide»).

Les feuilles de matériau thermoplastique 5 et 6, en un matériau traditionnel comme le PVB, permettent le collage sur toute la surface du film à cristaux liquides 3 dont les faces de PET nécessitent la présence de matériau assurant l'adhérence des éléments les uns aux autres, ce que ne permet pas le PET seul.

Si toutes les feuilles intercalaires offrent une certaine transparence au spectre visible, dans l'exemple les feuilles 5 et/ou 6 sont fortement teintées pour ajuster la transmission globale du vitrage en combinaison avec l'absorption due aux feuilles de verre teintées. Dans les PVB teintés usuels l'absorption par une seule feuille d'épaisseur traditionnelle peut être insuffisante. C'est la raison pour laquelle dans l'exemple deux feuilles sont en PVB teinté. Dans d'autres configurations, avec une feuille plus épaisse ou plus fortement teintée, une seule feuille suffit, de préférence la feuille 5.

La nature des intercalaires peut intervenir dans les propriétés du vitrage. Leur composition chimique est susceptible de conduire à des réactions non souhaitées. Par exemple il est connu que les plastifiants de certains intercalaires comme les PVB les plus usuels, sont susceptibles de migrer, particulièrement sous l'effet de la chaleur. Cette situation peut par exemple se produire sur le bord du film LC 3 au contact du matériau de l'intercalaire formant le cadre 9. La migration de plastifiant du cadre 9 vers le film 3 peut faire apparaitre un voile local. Ce voile inesthétique peut être masqué par les bandes émaillées 21. Néanmoins il est possible de prévenir l'apparition de ce défaut en utilisant un moyen évitant le contact. Ceci est par exemple obtenu en interposant sur les bords du film 3 une barrière constituée d'un film mince de PET. Un autre moyen consiste à n'utiliser comme cadre 9 que des intercalaire dépourvu de produits susceptibles de migrer, notamment des produits de type EVA (éthylène vinyl acétate).

Un autre mécanisme est susceptible d'altérer la qualité optique du vitrage. Comme décrit en détail dans la demande WO 2009/050195, les produits de type PVB qui renferment des ions notamment alcalins peuvent prendre une teinte brune au contact de circuit conducteurs de l'électricité. De plus cette altération peut s'accompagner d'une modification de la conductivité des couches en question. La publication mentionnée établit que ces altérations viennent de la présence d'une certaine teneur en ions monovalents, notamment des ions alcalins résiduels présents dans certains matériaux du type PVB. Pour éviter ces inconvénients l'usage d'intercalaires renfermant des ions de plus grande dimensions, et donc moins mobiles, est proposée.

Pour cette raison il est préféré d'utiliser une feuille intercalaire 7 qui est au contact de la couche conductrice 15 alimentant les diodes 14, dans un matériau répondant à ces caractéristiques. A titre indicatif un tel matériau est celui commercialisé sous le nom de TROSIFOL Solar par la société Kuraray.

Les épaisseurs des différents intercalaires sont de préférence limitées au strict nécessaire pour ne pas accroître inutilement l'épaisseur et par suite le poids du vitrage. Les feuilles intercalaires sont ainsi celles du commerce les moins épaisses soit de 0,38mm, à l'exclusion des celle destinée à envelopper les diodes 14. Pour garantir une bonne incorporation des diodes dans l'intercalaire ramolli au cours du processus d'assemblage, le ou les intercalaires faisant face aux diodes doivent offrir une épaisseur au moins égale à la hauteur des diodes sur leur support. Par précaution on utilise une épaisseur d'intercalaire un peu supérieure. C'est la raison pour laquelle deux intercalaires 7 et 8 sont utilisés qui totalisent une épaisseur de 1,14+0,76mm, soit près de 2mm, pour une hauteur des diodes sur la feuille support 4, de l'ordre de 0,8 à 1,5mm.

A l'assemblage les feuilles intercalaires soumises à l'étuve et sous vide, se collent les unes aux autres et aux feuilles de verre et de PET. Le vide maintenu permet l'évacuation des bulles d'air qui pourraient être emprisonnées.

Dans l'exemple les feuilles de verre 1 et 2 sont respectivement de 1,6mm et 2,1 mm d'épaisseur. Le vitrage assemblé présente une épaisseur totale de 7,54mm.

La feuille 1 est d'un verre clair dont les caractéristiques optiques sont sous 4mm d'épaisseur et un illuminant A : TL A4 90 % ; TE4 86%.

La feuille 2 est de verre gris dont les caractéristiques sont :

TL A 4 17% ; TE4 15 % ; $\lambda_D$ 490nm ; P 1,8

($\lambda_D$ est la longueur d'onde dominante et P est la pureté d'excitation).

Le vitrage assemblé, comportant les couches réfléchissant les infrarouges en position 2, et plusieurs feuilles intercalaires de PVB gris, présente les caractéristiques optiques suivantes :

- le film à cristaux liquide étant à l'état non activé
  TL A 3,1% ; TE 1,4% ; $\lambda_D$ 586 nm ; P 5,7 ; et un indice de rendu des couleurs (D65 EN 410) de 96.
  En coordonnées CIELab cette coloration en transmission est caractérisée par :
  L*20,5 , a * 0,7 , b* 1,3
  En réflexion vers l'extérieur la réflectance s'établit à 12,2%, et les coordonnées colorimétriques sont
  L* 41,6 , a *-3,0 , b*-4,0
  la réflexion à l'intérieur du véhicule est de 4,3% ;

- le film à cristaux liquide étant à l'état activé sous 65v et 50hz
  TL A 6,0% ; TE 3,0% ; $\lambda_D$ 555 nm ; P 4,0 ; et un indice de rendu des couleurs (D65 EN 410) de 93.

En coordonnées CIELab la coloration en transmission est :
L*29,3 , a * 1,7 , b* - 1,9
En réflexion vers l'extérieur la réflectance s'établit à 12,2%, et les coordonnées colorimétriques sont
L* 41,6 , a *-3,3 , b*-3,5
la réflexion à l'intérieur du véhicule est de 4,3%.

La figure 2 représente de manière schématique en coupe partielle le vitrage de la figure 1 après assemblage. Est ajoutée la bande émaillée noire opaque 21, qui dissimule, notamment de l'extérieur, les limites du film LC sous-jacent. De cette façon l'apparence du vitrage présente une certaine uniformité à l'exception des éléments insérés 4 porteur des diodes. L'utilisation d'une lame support 4 en verre dont 1"indice de réfraction est un peu différent de celui de l'intercalaire de PVB dans lequel il s'insère, n'est pas entièrement masqué, mais il demeure peu visible en raison de la feuille très absorbante 2.

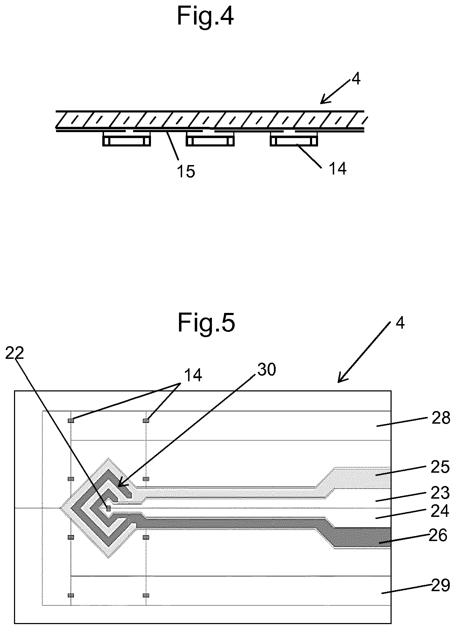

La figure 4 illustre de manière schématique la disposition des diodes 14 sur le support constitué par la lame de verre 4 revêtue d'une couche conductrice d'ITO 15.

La couche conductrice 15 est découpée de manière à constituer le circuit d'alimentation des diodes 14. Les diodes sont colléesées à cette couche. Elles sont rassemblées sur une surface limitée pour conduire à un faisceau concentré de puissance suffisante. Le circuit conducteur est constitué de manière à séparer les pôles d'alimentation, chaque diode étant reliée directement ou non à chacun des deux pôles. Les diodes peuvent être montées en série ou en parallèle ou dans des sous-ensemble constituant des séries comme représenté à la figure 5. L'avantage d'un montage en série est de simplifier les circuits d'alimentation. L'inconvénient manifeste est le risque d'une défaillance d'une diode entraînant celle de l'ensemble monté en série.

Un circuit schématique est par exemple présenté à la figure 5. La lame 4 vue de dessus, comporte une couche conductrice qui est appliquée sur la majeure partie de la lame. La couche est divisée pour constituer le circuit d'alimentation des diodes 14. La couche est en deux parties symétriques conservant une large surface pour dissiper le plus possible la chaleur produite dans cette couche par effet Joule. Les dimensions des surfaces de ces conducteurs sont déterminées également de manière à garantir un courant d'alimentation pratiquement identique pour chacune des diodes 14. Chaque partie alimente 4 diodes et est elle-même divisée en deux (28 et 29) correspondant chacune à un pôle d'alimentation (+,-). Les diodes 14 montées en série de quatre, sont chacune reliée aux deux pôles.

Pour former le circuit la couche 15 s'étend initialement de manière uniforme sur toute la surface de la feuille de verre 4 avec éventuellement des bords non revêtus. La séparation des différentes zones dans cette couche est obtenue selon des lignes 21, tracées dans cette couche par exemple par ablation au moyen d'un laser par des méthodes antérieures bien connues. La largeur de l'ablation est limitée à ce qui est nécessaire pour garantir que les zones sont bien isolées électriquement les unes des autres.

La distribution des diodes est faite en sorte de répartir le mieux possible la chaleur produite en cours de fonctionnement. Les diodes sont espacées les unes des autres, mais à distance limitée par la nécessité de rassembler l'émission lumineuse résultante. Dans l'exemple les diodes sont disposées en rectangle de 6x12cm.

A titre d'exemple la couche conductrice est une couche ITO («indium tin oxide») de $10\Omega/\square$ de résistance. La couche ITO est intéressante notamment en raison de sa neutralité de couleur. Elle ne modifie pas sensiblement l'aspect en transmission notamment.

La figure 5 présente aussi une électrode 30 comprenant deux éléments imbriqués l'un dans l'autre et reliés à des conducteurs 25, 26. L'électrode et ses conducteurs sont également réalisés dans la couche conductrice découpée comme le circuit d'alimentation des diodes. Cette électrode 30 est reliée à un ensemble commandant l'interrupteur des diodes dans un circuit de type à variation de capacité. Le temps de charge de l'électrode est commandé par sa capacité elle-même variant en fonction des éléments conducteurs placés à proximité et qui modifient le champ électromagnétique. Le mouvement de l'opérateur dans ce sens, déclenche ainsi un relais interrupteur des diodes. Le cas échéant le circuit de façon connue peut aussi comprendre un variateur («dimmer») conduisant à différents niveaux d'alimentation pour un éclairage d'intensité variée, chaque impulsion faisant passer d'un niveau à un autre.

Pour limiter les déclenchements parasites, les conducteurs 25 et 26 de raccordement de l'électrode 30 au dispositif non représenté, est de surface aussi faible que possible à proximité de l'électrode elle-même. Le film 11 réfléchissant les infrarouges constitue un écran qui prévient le déclenchement du capteur capacitif depuis l'extérieur du véhicule. Cet écran s'ajoute à celui que constituent les électrodes de commande du film LC.

La lame de verre 4 dans l'exemple présenté comprend en plus une diode 22 dont le rôle est d'indiquer l'emplacement de l'électrode de commande. Cette diode est de très faible puissance comparée à celle des diodes de la liseuse. Elle fonctionne par exemple lorsque les diodes de la liseuse ne sont pas allumées. La diode 22 est également alimentée par des conducteurs 23, 24 découpés dans la couche conductrice 15.

Les conditions fixées pour une liseuse sont par exemple de disposer d'un éclairement donné suffisant sur une surface et à une distance déterminées. Dans un exemple la distance est de 0,6m entre le toit et la surface à éclairer laquelle est fixée à un cercle de rayon 0,25m. L'éclairage minimum requis sur cette surface est par exemple de 55 lux.

Dans l'exemple considéré les diodes mises en œuvre sont de marque Nichia de type NS2W150A. Il s'agit de diodes de moyenne puissance produisant une lumière «blanche froide». Elles sont alimentées sous une tension de 3,2v et chacune sous une intensité de 25mA.

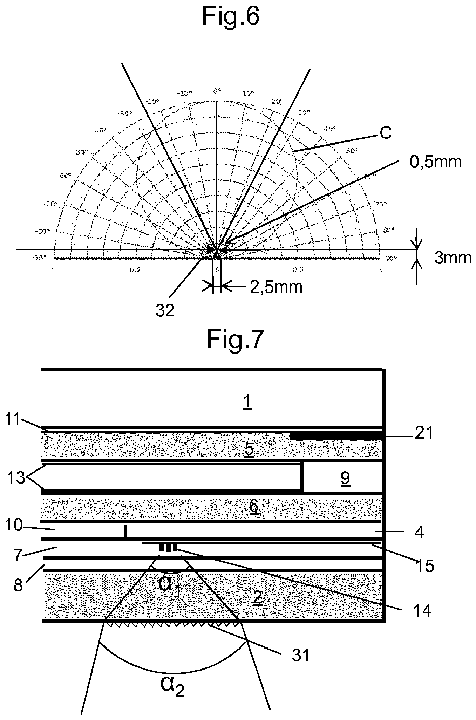

L'intensité lumineuse donnée par le fabricant est de 17,4cd pour une intensité de 0,150A. On peut estimer sur le domaine considéré que l'intensité lumineuse est à peu près proportionnelle à l'intensité électrique. Cette intensité lumineuse selon la normale à la diode s'établit donc à environ 2,9cd. Elle varie selon la direction considérée de la manière présentée au graphique de la figure 6. Ainsi sans moyen optique modifiant la direction du flux lumineux, pour l'angle de 23° de part et d'autre de la normale, qui correspond approximativement à la zone éclairée recherchée pour les conditions indiquées ci-dessus, l'intensité lumineuse pour une diode est d'environ 10,45cd. Il faut tenir compte de l'incidence de l'insertion des diodes dans le feuilleté, et notamment des réflexions et de l'absorption lumineuse sur le trajet du faisceau. Finalement pour atteindre l'éclairement nécessaire il faut de l'ordre de 8 diodes de ce type pour constituer la liseuse.

Le fait d'utiliser une pluralité de diodes de puissance limitée en dehors du contrôle de l'échauffement local, réduit aussi l'effet d'éblouissement qui peut provenir d'une observation directe des diodes. Cet effet peut encore être minimisé en favorisant une certaine diffusion du faisceau lumineux par exemple par un dépoli de la feuille interne à l'emplacement correspondant aux diodes.

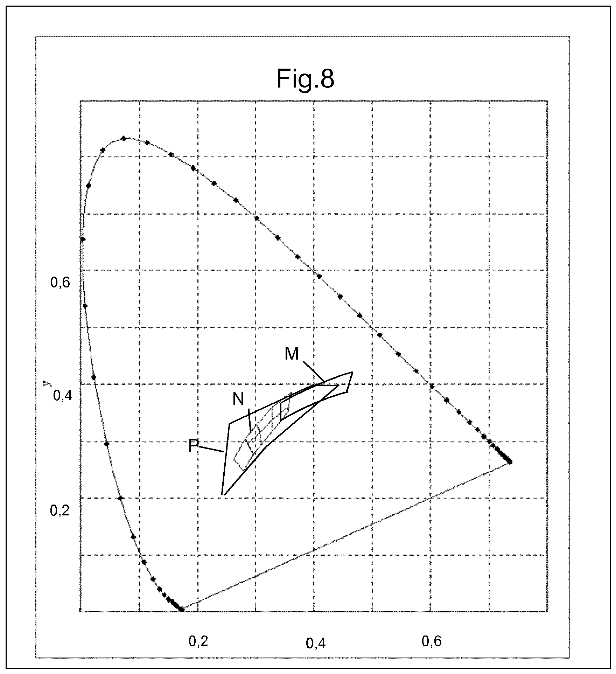

Le flux lumineux émis par les diodes se caractérise par des coordonnées colorimétriques reportées sur le diagramme de la figure 8 et représenté par les limites désignées globalement par N. Le domaine tel que présenté par le fabricant est subdivisé en parties correspondant à des classes distinctes laissées au choix de l'utilisateur. Le fabricant propose le cas échéant un tri préalable pour que toutes les diodes se situent dans une seule de ces parties. Cette sélection qui permet d'affiner la couleur s'accompagne d'un coût supplémentaire. Sur le même graphique est reporté le périmètre P correspondant à la couleur préférée selon l'invention. A noter que cette couleur qui recouvre en grande partie celle des diodes, tient compte aussi de l'incidence de la feuille de verre qui est interposée entre les diodes et l'habitacle, et éventuellement de l'intercalaire si celui-ci est choisi de couleur.

Dans l'exemple précédent les diodes émettent un flux de lumière blanche légèrement bleutée qui est qualifiée de «froide». Si une lumière «chaude» est préférée, on peut choisir un produit de même type comme celui de Nichia référencé NS2L150A. Le spectre de ces diodes correspond au périmètre désigné par M.

Comme indiqué précédemment des diodes plus puissantes sont éventuellement utilisées, mais en dehors d'un coût supplémentaire, elles ont l'inconvénient d'une moindre longévité.

La disposition des 8 diodes dans le feuilleté ne conduit pas à un échauffement dommageable. Pour un fonctionnement continu dans une atmosphère immobile à température ambiante de 25°C, le vitrage étant disposé en position sensiblement horizontale, la température s'élève jusqu'à environ 35°C. Ces températures n'altèrent ni les diodes, ni les composants du vitrage.

Sans moyen de concentration le flux lumineux émis par les diodes choisies se distribue de la façon représentée au graphique de la figure 4. Sur ce graphique figure à l'horizontale l'échelle des intensités lumineuses. Les demi-cercles concentriques présentent les fractions d'intensité de de 0 à 100% de l'intensité la plus forte qui se situe à la verticale. L'intensité est lue sur le graphique à l'intersection de la droite correspondant à la direction avec le cercle C. L'intensité lumineuse décroît rapidement avec un angle croissant par rapport à la normale à la source. Elle n'est plus que de moitié environ pour un angle de 60°. Cette distribution peut être satisfaisante si, en dehors de la surface que l'on veut éclairer, il n'est pas gênant d'avoir une certaine luminosité. Dans l'hypothèse inverse il convient de restreindre le faisceau lumineux.

La figure 7 analogue à la figure 2 présente de manière schématique le flux lumineux issu du vitrage. Le flux lumineux émis par les diodes 14 est distribué en un faisceau largement ouvert. Sans autre dispositif que le réflecteur qui fait partie de l'enveloppe de la diode, le flux initial se développe sur un angle à l'origine, autrement dit dans le matériau intercalaire et dans la feuille 2, qui peut aller jusqu'à 180° et n'est pas ordinairement inférieur à 120° fonction de la configuration de l'enveloppe de la diode. Ceci est représenté par l'angle $\alpha_1$.

Lorsque l'on souhaite limiter le faisceau des mesures complémentaires sont nécessaires. La figure 7 illustre de manière schématique l'utilisation d'une optique de Fresnel 31 sur la face 4 du vitrage en regard des diodes. Le faisceau est ainsi ramené à un angle plus restreint $\alpha_2$.

Un autre mode susceptible de produire un faisceau moins largement ouvert consiste en l'utilisation d'un diaphragme qui limite le flux à la partie dirigée dans le sens souhaité. Le diaphragme peut être constitué dans un motif émaillé opaque 32, appliqué sur la face de la feuille de verre 2 tournée vers l'habitacle. Cette disposition doit être appliquée à chaque diode individuellement. Il est donc nécessaire que les positions respectives des diodes et des ouvertures dans la couche émaillée opaque, soient rigoureusement établies.

Le graphique de la figure 6 illustre l'effet d'un exemple de ce mode de limitation du faisceau par diaphragme. Le diaphragme est schématisé par les deux flèches définissant son ouverture. L'émail 32 est disposé à 3mm de la source dont la dimension est celle d'une diode, soit environ 2,5mm. L'ouverture libre d'émail est de 0,5mm. Dans cette configuration le faisceau s'ouvre à 48° d'angle.

Les toits vitrés selon l'invention combinent avantageusement plusieurs fonctionnalités. Parmi celles-ci il est intéressant de bénéficier du toit vitré pour l'éclairage, comme développé ci-dessus, mais aussi de disposer d'une variation commandée de la transmission lumineuse, que cette variation soit ou non mise en œuvre simultanément.

L'utilisation de films LC permet de modifier de façon la transmission entre deux états distincts, un état transparent et un état diffusant. Sans application de champ électrique le vitrage est diffusant et assure le caractère «privatif» recherché. La variation de transmission lumineuse visible entre les deux états du film LC ajoute aussi à ce caractère mais reste limitée.

La structure du vitrage est aussi telle qu'elle lui confère dans tous les modes d'utilisation un caractère non éblouissant.

La description de l'interrupteur des diodes peut être reproduite pour ce qui concerne le possible interrupteur commandant le fonctionnement du film LC. Le capteur comporte aussi des électrodes transparente constituées dans une couche mince conductrice et transparente qui est avantageusement analogue à celle décrite à propos de la commande des diodes. Comme pour le capteur associé au diodes celui commandant le film LC peut comporter un élément signalant la position de ce capteur. Là aussi une diode de faible puissance est avantageusement utilisée. Bien évidemment le circuit constitué dans la couche conductrice est plus simple dans la mesure où en dehors des électrodes ce support ne comporte que deux conducteurs pour alimenter la diode en question.

A la figure 7 les éléments fonctionnels présents dans le feuilleté sont dans des positions relatives qui tiennent compte de leur possible interdépendance. A titre indicatif les moyens d'éclairage constitués par les diodes électroluminescentes sont bien évidemment situés sous le film de contrôle de la transmission lumineuse, de sorte que le flux lumineux qu'elles produisent est indépendant des variations de l'absorption lumineuse imposées par ce film.

Le film de contrôle de la transmission lumineuse, comme les moyens d'éclairage sont nécessairement alimentés électriquement. Leur raccordement au système général d'alimentation électrique du véhicule se fait nécessairement à partir des bords du vitrage. Les conduites électriques de connexion ne sont pas normalement transparentes. Pour ne pas rompre la transparence même limitée du vitrage, on s'efforce de dissimuler ces conduites dans les zones périphériques du vitrage, lesquelles comportent normalement des parties émaillées opaques destinées notamment à masquer les marques de collage irrégulières.

La structure des films de type LC est schématisée à la figure 3. Cette structure comporte un élément central 12 constitué d'un polymère contenant les particules sensibles à l'application du champ électrique. De part et d'autre de cet élément central 12, et s'étendant sur chacune des faces de celui-ci, deux électrodes 13 permettent d'appliquer la tension nécessaire à la commande. De manière connue les électrodes 13 sont avantageusement constituées de feuilles essentiellement transparentes revêtues de couches minces conductrices. Le plus usuellement de feuilles de polytéréphtalate d'éthylène glycol (PET) de quelques dizaines de microns d'épaisseur qui combinent une bonne transparence à une résistance mécanique élevée. Sur ces feuilles les couches conductrices sont avantageusement du type TCO, tel que les couches d'ITO (indium tin oxide).

## Revendications

1. Toit de véhicule automobile vitré feuilleté comprenant deux feuilles de verre externe (1) et interne (2) et des feuilles intercalaires (5,9,6,7,8) assemblant les feuilles de verre, et comprenant, disposés entre les deux feuilles de verre, un ensemble de contrôle de la transmission lumineuse de type LC (film à cristaux liquides) (3), et des éléments d'éclairage par diodes électroluminescentes (LED) (14) **caractérisé en ce que** le choix des diodes, de leur alimentation et de leur disposition dans le feuilleté est tel qu'en fonctionnement continu la température dans le feuilleté demeure inférieure à 100°C.

2. Toit selon la revendication précédente dans l'épaisseur duquel l'ensemble LC (3) et les LED (14) sont superposés, les LED (14) étant disposées sous l'ensemble LC (3).

3. Toit selon l'une quelconque des revendications précédentes dans lequel la puissance électrique de fonctionnement des diodes n'est pas supérieure à 2w et de préférence est inférieure à 1w.

4. Toit selon l'une quelconque des revendications précédentes dans lequel l'efficacité lumineuse de chaque diode n'est pas inférieure à 15lm/w et de préférence pas inférieure à 75lm/w.

5. Toit selon l'une des revendications précédentes dans lequel les diodes et les éléments situés entre ces diodes et l'habitacle sont choisis de telle sorte que le flux lumineux présente un spectre qui se situe dans le périmètre défini par les points de coordonnées CIE 1931 : (0,2600;0,3450), (0,4000;0,4000) (0,4500;0,4000), (0,31505;0,2900), (0,2350;0,2000).

6. Toit selon l'une des revendications précédentes comprenant deux feuilles de verre constituant les deux faces externe (1) et interne (2) du toit, au moins une des feuilles étant constituée d'un verre coloré fortement absorbant.

7. Toit selon l'une des revendications précédentes dans lequel un système de couches formant filtre infrarouge (11) est disposé entre la feuille de verre externe (1) et l'ensemble LC (3).

8. Toit selon la revendication 7 dans lequel le système de couches filtre infrarouge (11) est appliqué sur la feuille de verre externe (1) en face 2.

9. Toit selon la revendication 7 ou la revendication 8 dans lequel le système de couches est un système produit par pulvérisation cathodique et comporte un ensemble de trois couches à base d'argent.

10. Toit selon l'une des revendications précédentes dans lequel une feuille intercalaire (5) située entre la feuille de verre externe (1) et le film LC (3) est colorée et constitue un écran aux UV.

11. Toit selon l'une des revendications précédentes comportant des commandes d'interrupteur avec un capteur de type capacitif 30) incorporé dans le toit pour commander les diodes (14) et/ou le film LC (3).

12. Toit selon l'une des revendications précédentes dont l'ensemble des constituants, feuilles de verre (1,2), intercalaires (5,6,10,7,8), film LC (3), couches réfléchissantes (11) limitent la transmittance, mesurée selon la norme EN410 avec sphère d'intégration, à l'état activé du film LC (3) au plus à 30%, de préférence au plus de 20% et de façon particulièrement préférée au plus à 10%.

13. Toit selon la revendication 12 dans lequel la transmittance est au moins égale 3%.

14. Toit selon l'une des revendications précédentes dans lequel le film LC (3) est choisi de telle sorte qu'à l'état activé, le «haze» mesurant la diffusion selon la norme ASTMD 1003, orthogonalement à la surface ne soit pas supérieur à 12% et de préférence pas supérieur à 10%.

15. Toit selon l'une des revendications précédentes dans lequel le film LC (3) est choisi de telle sorte qu'à l'état activé, le «haze» mesurant la diffusion selon la norme ASTMD 1003, pour un angle allant jusqu'à 20° par rapport à la normale à la surface, ne soit pas supérieur à 20% et de préférence pas supérieur à 15%.

16. Toit selon l'une des revendications précédentes dans lequel la transmission énergétique mesurée selon la norme ISO 13837, à l'état non activé du film LC (3) est inférieure à 10% et de préférence inférieure à 8%.

17. Toit selon l'une des revendications précédentes dans lequel la feuille de verre (1) tournée vers l'extérieur, est une feuille de verre clair ou extra clair.

18. Toit selon l'une des revendications précédentes dans lequel les constituants sont choisis de telle sorte que la réflexion à l'intérieur du véhicule soit inférieure à 15% et de préférence inférieure à 10%.


**Patentansprüche**

1. Laminiertes verglastes Kraftfahrzeugdach, welches zwei Glasscheiben, eine äußere (1) und eine innere (2), und Zwischenschichtfolien (5, 9, 6, 7, 8), welche die Glasscheiben verbinden, umfasst, und, zwischen den zwei Glasscheiben angeordnet, eine Anordnung zur Steuerung der Lichtdurchlässigkeit vom Typ LC (Flüssigkristallfilm) (3) und Elemente zur Beleuchtung durch Leuchtdioden (LED) (14) umfasst, **dadurch gekennzeichnet, dass** die Wahl der Dioden, ihrer Stromversorgung und ihrer Anordnung in der Verbundverglasung so erfolgt, dass im Dauerbetrieb die Temperatur in der Verbundverglasung niedriger als 100 °C bleibt.

2. Dach nach dem vorhergehenden Anspruch, in dessen Dicke die LC-Anordnung (3) und die LED (14) übereinander angeordnet sind, wobei die LED (14) unter der LC-Anordnung (3) angeordnet sind.

3. Dach nach einem der vorhergehenden Ansprüche, wobei die elektrische Betriebsleistung der Dioden nicht höher als 2 W und vorzugsweise niedriger als 1 W ist.

4. Dach nach einem der vorhergehenden Ansprüche, wobei die Lichtausbeute jeder Diode nicht kleiner als 15 lm/W und vorzugsweise nicht kleiner als 75 lm/W ist.

5. Dach nach einem der vorhergehenden Ansprüche, wobei die Dioden und die Elemente, die sich zwischen diesen Dioden und dem Fahrzeuginnenraum befinden, so gewählt sind, dass der Lichtstrom ein Spektrum aufweist, welches sich in dem Bereich befindet, der durch die Punkte mit folgenden Koordinaten im CIE-1931-Farbraum definiert ist: (0,2600; 0,3450), (0,4000; 0,4000), (0,4500; 0,4000), (0,3150; 0,2900), (0,2350; 0,2000).

6. Dach nach einem der vorhergehenden Ansprüche, welches zwei Glasscheiben umfasst, welche die zwei Seiten, die Außenseite (1) und die Innenseite (2), des Daches bilden, wobei wenigstens eine der Scheiben aus einem stark absorbierenden Farbglas besteht.

7. Dach nach einem der vorhergehenden Ansprüche, wobei ein Schichtensystem, welches ein Infrarotfilter (11) bildet, zwischen der äußeren Glasscheibe (1) und der LC-Anordnung (3) angeordnet ist.

8. Dach nach Anspruch 7, wobei das Infrarotfilter-Schichtensystem (11) auf die äußere Glasscheibe (1) auf der Seite 2 aufgebracht ist.

9. Dach nach Anspruch 7 oder Anspruch 8, wobei das Schichtensystem ein System ist, das durch kathodische Zerstäubung hergestellt ist und eine Anordnung von drei Schichten auf der Basis von Silber aufweist.

10. Dach nach einem der vorhergehenden Ansprüche, wobei eine Zwischenschichtfolie (5), die sich zwischen der äußeren Glasscheibe (1) und dem LC-Film (3) befindet, gefärbt ist und einen UV-Schutzschirm bildet.

11. Dach nach einem der vorhergehenden Ansprüche, welches Schaltersteuerungen aufweist, mit einem Sensor vom kapazitiven Typ 30), der in das Dach integriert ist, um die Dioden (14) und/oder den LC-Film (3) zu steuern.

12. Dach nach einem der vorhergehenden Ansprüche, dessen Anordnung der Bestandteile, Glasscheiben (1, 2), Zwischenschichtfolien (5, 6, 10, 7, 8), LC-Film (3), reflektierende Schichten (11), die nach der Norm EN 410 mit Integrationskugel gemessene Lichtdurchlässigkeit im aktiven Zustand des LC-Films (3) auf höchstens 30 %, vorzugsweise auf höchstens 20 % und, besonders bevorzugt, auf höchstens 10 % begrenzt.

13. Dach nach Anspruch 12, wobei die Lichtdurchlässigkeit mindestens 3 % beträgt.

14. Dach nach einem der vorhergehenden Ansprüche, wobei der LC-Film (3) derart gewählt ist, dass im aktiven Zustand der "Haze-Wert", der die Streuung nach der Norm ASTMD 1003 misst, orthogonal zur Oberfläche nicht größer als 12 % und vorzugsweise nicht größer als 10 % ist.

15. Dach nach einem der vorhergehenden Ansprüche, wobei der LC-Film (3) derart gewählt ist, dass im aktiven Zustand der "Haze-Wert", der die Streuung nach der Norm ASTMD 1003 misst, für einen Winkel von bis zu 20° in Bezug auf die Normale zur Oberfläche nicht größer als 20 % und vorzugsweise nicht größer als 15 % ist.

16. Dach nach einem der vorhergehenden Ansprüche, wobei die Energietransmission, gemessen nach der Norm ISO 13837, im nicht aktiven Zustand des LC-Films (3) kleiner als 10 % und vorzugsweise kleiner als 8 % ist.

17. Dach nach einem der vorhergehenden Ansprüche, wobei die der Außenseite zugewandte Glasscheibe (1) eine Scheibe aus klarem oder extraklarem Glas ist.

18. Dach nach einem der vorhergehenden Ansprüche, wobei die Bestandteile derart gewählt sind, dass die Reflexion im Inneren des Fahrzeugs kleiner als 15 % und vorzugsweise kleiner als 10 % ist.

**Claims**

1. Laminated glazed automotive vehicle roof comprising two, external (1) and internal (2), glass sheets and interlayer sheets (5,9,6,7,8) assembling the glass sheets, and comprising, placed between the two glass sheets, a control assembly for controlling the light transmission of LC (liquid-crystal film) type (3), and lighting elements based on light-emitting diodes (LED) (14), **characterized in that** the choice of the diodes, of their power supply and of their arrangement in the laminate is such that during continuous operation the temperature in the laminate remains below 100°C.

2. Roof according to the preceding claim, in the thickness of which the LC assembly (3) and the LEDs (14) are superposed, the LEDs (14) being placed under the LC assembly (3).

3. Roof according to either one of the preceding claims, in which the operating electrical power of the diodes is not greater than 2 W and preferably is less than 1 W.

4. Roof according to any one of the preceding claims, in which the luminous efficacy of each diode is not less than 15 lm/W and preferably not less than 75 lm/W.

5. Roof according to one of the preceding claims, in which the diodes and the elements located between these diodes and the passenger compartment are chosen in such a way that the light flux has a spectrum which is located in the perimeter defined by the points of CIE 1931 coordinates: (0.2600;0.3450), (0.4000;0.4000) (0.4500;0.4000), (0.3150;0.2900), (0.2350;0.2000).

6. Roof according to one of the preceding claims, comprising two glass sheets forming the two, external (1) and internal (2), faces of the roof, at least one of the sheets being formed of a strongly absorbent coloured glass.

7. Roof according to one of the preceding claims, in which a system of infrared-filter-forming layers (11) is placed between the external glass sheet (1) and the LC assembly (3).

8. Roof according to Claim 7, in which the system of infrared filter layers (11) is applied to the external glass sheet (1) on face 2.

9. Roof according to Claim 7 or Claim 8, in which the system of layers is a system produced by cathode sputtering and comprises an assembly of three silver-based layers.

10. Roof according to one of the preceding claims, in which an interlayer sheet (5) located between the external glass sheet (1) and the LC film (3) is coloured and screens out UV radiation.

11. Roof according to one of the preceding claims, comprising switch controls with a sensor of capacitive type (30) incorporated into the roof to control the diodes (14) and/or the LC film (3).

12. Roof according to one of the preceding claims, of which the assembly of the constituents, glass sheets (1,2), interlayer sheets (5,6,10,7,8), LC film (3), reflecting layers (11) limit the transmittance, measured according to the EN410 standard with integration sphere, in the activated state of the LC film (3) at most to 30%, preferably to at most 20% and in a particularly preferred manner at most to 10%.

13. Roof according to Claim 12, in which the transmittance is at least equal to 3%.

14. Roof according to one of the preceding claims, in which the LC film (3) is chosen in such a way that in the activated state, the haze measuring the diffusion according to the ASTMD 1003 standard, orthogonally to the surface is not greater than 12% and preferably not greater than 10%.

15. Roof according to one of the preceding claims, in which the LC film (3) is chosen in such a way that in the activated state, the haze measuring the diffusion according to the ASTMD 1003 standard, for an angle of up to 20° with respect to the normal to the surface, is not greater than 20% and preferably not greater than 15%.

16. Roof according to one of the preceding claims, in which the energy transmission measured according to the ISO 13837 standard, in the unactivated state of the LC film (3) is less than 10% and preferably less than 8%.

17. Roof according to one of the preceding claims, in which the outward facing glass sheet (1) is a clear or extra-clear glass sheet.

18. Roof according to one of the preceding claims, in which the constituents are chosen in such a way that the reflection inside the vehicle is less than 15% and preferably less than 10%.

Fig.1

# Fig. 2

# Fig.3

Fig.4

4

15        14

Fig.5

4

22        14        30

28

25

23

24

26

29

## Fig.6

C

0,5mm

3mm

2,5mm

32

## Fig.7

# Fig.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004062908 A
- EP 1437215 A
- EP 1979160 A
- WO 2011147875 A
- BE 20110415
- BE 20120036
- EP 1171294 A
- FR 2738238
- EP 1680371 A
- EP 887320 A
- EP 1140718 A
- WO 2009050195 A